# EUROPEAN PATENT APPLICATION

(11) **EP 0 591 897 A1**
(43) Date of publication of application: **13.04.1994**
(21) Application number: 93116014.7
(22) Date of filing: 04.10.1993
(51) Int. Cl.: B62K 21/12

(54) **Handle-bar stem for bicycle**

(30) Priority: 06.10.1992 JP 75445/92 U
(71) Applicant: SR SUNTOUR INC., Tsukuba-gun, Ibaraki-ken (JP)
(72) Inventor: Hosoi, Masafumi, Kitasoma-gun, Ibaraki-ken (JP)
(74) Representative: Weisert, Annekäte, Dipl.-Ing. Dr.-Ing.

(57) **Abstract**

A handle stem of a bicycle includes a recess (13) formed in the stem body (10) and in which the heads of the bar fastening screw (14) and the pulling-out bolt (15) are positioned and a cap (19) fitted onto the recess (13). The threaded portion of the bar fastening screw (14) is driven into the threaded penetration hole (16) formed in the movable end (12a) of the bar holder (12).

## Description

### BACKGROUND OF THE INVENTION

The present invention relates to a handle stem of a bicycle, and more particularly to a handle stem of a bicycle including a structure in which a bar fastening screw for fastening a handlebar of a bicycle is driven from the upper side.

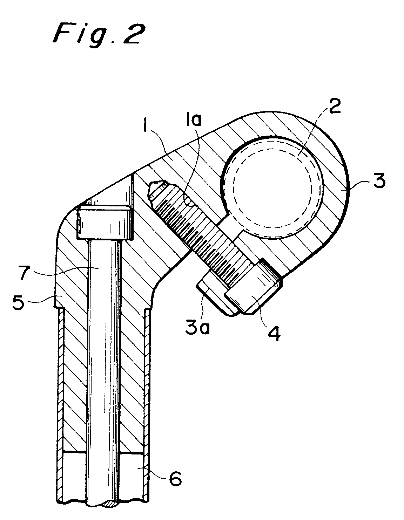

Fig. 2 is a sectional view showing a conventional handle stem of a bicycle. In Fig. 2, numeral 1 denotes a stem body. The stem body 1 includes a bar holder 3 into which a handlebar 2 is inserted. A bar fastening screw 4 passes through a movable end 3a of the bar holder 3 obliquely from the lower side. The threaded portion at the tip of the bar fastening screw 4 is inserted to be engaged with a threaded hole 1a of the stem body 1 obliquely from the lower side. A cylindrical base portion 5 of the stem body 1 is press fitted into a stem tube 6 and a pulling-out bolt 7 penetrates the base portion from the upper side.

In the conventional handle stem of the bicycle structured above, when the bar fastening screw 4 is driven into the stem body 1 obliquely from the lower side, the tip of the screw 4 is not projected from the upper surface of the stem body 1 and accordingly the stem body has an excellent external appearance.

However, when the threaded hole 1a is formed in the stem body 1 so that the hole 1a does not penetrates the stem body, the hole is filled with chips and accordingly it is necessary to remove the chips.

Further, a hollow seat for positioning the head of the pulling-out bolt 7 is formed in the upper surface of the stem body 1 and another hollow seat for positioning the head of the bar fastening screw 4 is also formed in the movable end 3a, while it is necessary to provide a complicated metal mold in order to mold the stem body 1 having such a structure and it is difficult to attain the mass-production thereof. Accordingly, the hollow seat for the bar fastening screw 4 formed in the stem body 1 and a prepared hole for the threaded hole 1a are often formed by the machine work after the stem body 1 has been molded.

In addition, when an angle of grips of the handlebar 2 is adjusted, it is necessary to loosen the bar fastening screw 4 and drive it again after the adjustment of the angle of the handlebar 2. In this case, when a basket is hung from the handlebar 2, the loosening work of the bar fastening screw 4 is very troublesome since the basket is a hindrance to the loosening work.

### SUMMARY OF THE INVENTION

It is an object of the present invention to provide a handle stem of a bicycle capable of attaining the mass-production with good work efficiency and of adjusting an angle of the handlebar easily and having an excellent external appearance.

According to the present invention, the handle stem of a bicycle including a stem body having a bar holder for holding a handlebar to be able to fasten the handlebar, a bar fastening screw for causing a movable end of the bar holder to approach the stem body, and a pulling-out bolt which penetrates the stem body and extends to a stem tube, comprises a recess formed in the stem body and a cap fitted onto the recess, the heads of the pulling-out bolt and the bar fastening screw being positioned in the recess, the bar fastening screw being driven into a threaded penetration hole formed in the movable end.

The heads of the pulling-out bolt and the bar fastening screw are covered by the cap fitted onto the recess and accordingly the heads do not appear externally.

Since the threaded penetration hole is disposed in the movable end of the bar holder, the hole is not filled with chips upon formation of the hole.

When both of the heads of the pulling-out bolt and the bar fastening screw are disposed in the recess, hollow seats for both of the bolt and the screw may be formed in one recess side by side and accordingly only a simple metal mold is required.

Since the head of the bar fastening screw is positioned in the opposite side to the movable end of the bar holder, that is, in the recess formed in the upper side of the stem body, the bar fastening screw can be loosened and driven without the hindrance by the basket to adjust the angle of the handlebar.

### BRIEF DESCRIPTION OF THE DRAWINGS

Fig. 1 is a sectional view showing a handle stem of a bicycle according to the present invention; and
Fig. 2 is a sectional view of a conventional handle stem of a bicycle.

### DESCRIPTION OF THE PREFERRED EMBODIMENT

An embodiment of the present invention is now described in detail with reference to the accompanying drawing.

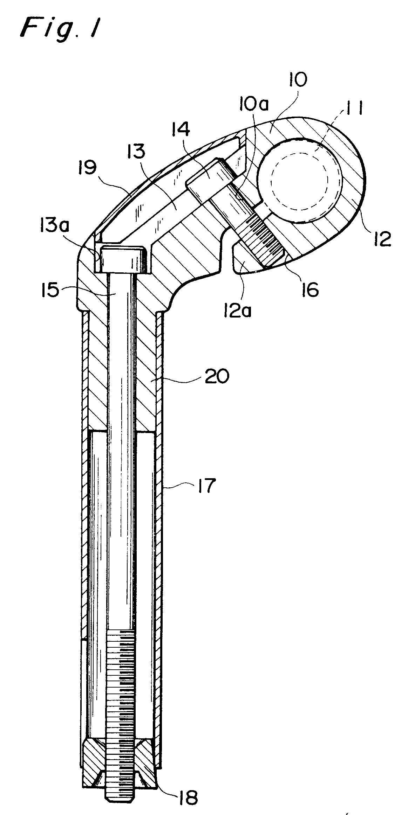

Fig. 1 is a sectional view showing a handle stem of a bicycle according to the present invention.

In Fig. 1, numeral 10 denotes a stem body. The stem body 10 includes a bar holder 12 into which a handlebar 11 is inserted and a movable end 12a is formed at the end of the bar holder 12. A recess 13 is formed in the upper surface of the stem body 10. The heads of the bar fastening screw 14 and the pulling-out bolt 15 are disposed in the recess 13. The bar fastening screw 14 is inserted into a penetration hole 10a formed in the stem body 10 obliquely from the upper side and the threaded portion at the tip of the screw 14 is driven into a threaded penetration hole 16 formed in the movable end 12a.

The head of the pulling-out bolt 15 is positioned in a hollow seat 13a formed in the recess 13 and the bolt 15 penetrates a cylindrical base 20 of the stem body 10 to extend to a stem tube 17. An expander cone 18 is engaged with a lower threaded portion of the pulling-out bolt 15. Accordingly, since the expander cone 18 is moved up by driving the pulling-out bolt 15, the whole handle stem can be fixedly pressed against a fork tube of a front fork by means of the cone 18 and the head of the pulling-out bolt 15.

A cap 19 having a corresponding shape is fitted onto the recess 13 in the waterproof manner.

In the handle stem of the present invention structured above, when the cap 19 is removed from the recess 13 and the bar fastening screw 14 is inserted into the penetration hole 10a of the stem body 10 obliquely from the upper side to be engaged with the threaded penetration hole 16 formed in the movable end 12a of the bar holder 12, the movable end 12a approaches the stem body 10, so that the handlebar 11 can be fixedly fastened.

On the other hand, by driving the pulling-out bolt 15, the whole handle stem can be fixed to the fork tube of the front fork as described above.

After both of the screw 14 and the bolt 15 have been fastened, the cap 19 is fitted onto the recess 13.

As described above, when the bar fastening screw 14 is inserted into the hole 10a from the upper side, that is, from the side of the stem body 10 to be driven into the threaded penetration hole 16 of the movable end 12a, the loosing and driving work of the bar fastening screw 14 can be made easily even if a basket is hung in the front of the stem body 10.

Further, the provision of the threaded penetration hole 16 in the movable end 12a does not injure the external appearance of the handle stem and does not fill the hole 16 with chips when the hole 16 is formed.

Since the stem body 10 has a simple shape having one recess 13, it can be mass-produced by using a simple metal mold.

Since the heads of the bar fastening screw 14 and the pulling-out bolt 15 in the recess 13 are covered by the cap 19, the handle stem is excellent in the external appearance and the heads can be prevented from being rusted. In addition, the cap 19 can be colored or lettered to improve its ornament.

As described above, according to the present invention, the recess is formed in the stem body and the cap is fitted onto the recess. The heads of the bar fastening screw and the pulling-out bolt are positioned in the recess and the bar fastening screw is driven into a threaded penetration hole formed in the movable end of the bar holder. Accordingly, the removing work of chips is not necessary and the handle stem of the bicycle can be mass-produced by a simple metal mold. Further, the angle of the handlebar can be made easily and there can be provided the handle stem of the bicycle having the excellent external appearance.

## Claims

1. A handle stem of a bicycle including a stem body having a bar holder for holding a handlebar to be able to fasten the handlebar, a bar fastening screw for causing a movable end of said bar holder to approach said stem body, and a pulling-out bolt which penetrates said stem body and extends to a stem tube, comprising a recess formed in said stem body and a cap fitted onto said recess, heads of said pulling-out bolt and said bar fastening screw being positioned in said recess, said bar fastening screw being driven into a threaded penetration hole formed in said movable end.
